# EUROPÄISCHE PATENTSCHRIFT

(11) **EP 3 266 097 B1**
(45) Veröffentlichungstag und Bekanntmachung des Hinweises auf die Patenterteilung: **04.12.2019**
(21) Anmeldenummer: 16706648.9
(22) Anmeldetag: 26.02.2016
(51) Int. Cl.: H02K 9/06, H02K 11/33

(54) **ELEKTRISCHE MASCHINE MIT EINEM LEITBLECH**
ELECTRIC MACHINE COMPRISING A BAFFLE
MACHINE ÉLECTRIQUE DOTÉE D'UN DÉFLECTEUR

(30) Priorität: 06.03.2015 DE 102015204026
(43) Veröffentlichungstag der Anmeldung: 10.01.2018
(73) Patentinhaber: Continental Automotive GmbH, 30165 Hannover (DE)
(72) Erfinder: FRÖHLICH, Holger, 13127 Berlin (DE); CHARLES, David, 10553 Berlin (DE); KRAUSE, Robert, 10409 Berlin (DE); SMIT, Arnoud, 90482 Nürnberg (DE)
(86) Internationale Anmeldenummer: PCT/EP2016/054147
(87) Internationale Veröffentlichungsnummer: WO 2016/142192

(56) Entgegenhaltungen:
- EP-A2- 2 773 030
- DE-A1-102006 013 089
- DE-A1-102009 046 192
- DE-A1-102011 003 189
- JP-A- H07 184 349
- JP-A- 2014 064 345
- JP-B1- 5 661 167
- JP-B1- 5 674 900

## Beschreibung

Die vorliegende Erfindung betrifft eine elektrische Maschine mit einem Leitblech zum Leiten eines Kühlmediums.

Moderne Fahrzeuge, insbesondere Elektrofahrzeuge, werden von Elektromotoranordnungen angetrieben, die jeweils eine elektrische Maschine zum Antrieb des Fahrzeugs und eine Leistungselektronik zum Bereitstellen von Phasenströmen für die elektrische Maschine aufweisen. Bedingt durch physikalische Eigenschaften der elektrischen Maschine und der Leistungselektronik entstehen beim Betrieb derartiger Elektromotoranordnungen Verlustleistungen, die in Form von Abwärme zur Temperaturerhöhung der Elektromotoranordnung führen. Eine hohe Eigentemperatur der Elektromotoranordnung kann zu einem Leistungsverlust der elektrischen Maschine und in extremen Fällen sogar zu einem Ausfall der Leistungselektronik führen. Um dies zu verhindern, muss die Abwärme abgeführt werden, bevor Schäden entstehen.

Hierfür werden doppelseitige Kühlungen vorgeschlagen, bei denen allerdings eine Steifigkeit einer Lagerung eines Rotors durch Anbringen von Belüftungsöffnungen herabgesetzt wird. Ein weiteres Problem ergibt sich daraus, dass angesaugte, temperaturbeladene Luft einen Lageraußenring nicht kühlen kann, so dass Rotorlager temperaturbedingt vorzeitig verschleißen.

Aus der JP 5 674900 B1 ist eine elektrische Maschine bekannt, die einen Rotor und einen Stator aufweist. Zudem umfasst die elektrische Maschine ein Invertergehäuse. Der Rotor ist in einem ersten Lagerschild und in einem zweiten Lagerschild um eine Drehachse drehbar gelagert. An dem zweiten Lagerschild sind Kühlrippe angeordnet, die sich in radialer Richtung erstrecken. Auf den Kühlrippen ist ein Leitblech angeordnet. Das zweite Lagerschild weist weiterhin eine Ansaugöffnung und eine Austrittsöffnung auf. Kühlluft wird über die Ansaugöffnung angesaugt und entlang der Kühlrippen geführt, wobei die Kühlluft um das Leitblech geführt und über die Auslassöffnung abgeführt wird.

Der vorliegenden Erfindung liegt daher die Aufgabe zugrunde, eine elektrische Maschine vorzuschlagen, die die genannten Nachteile vermeidet, mit der also eine wirksame Kühlung mit hoher Kühlleistung bei minimalem Platzbedarf erreicht werden soll.

Diese Aufgabe wird gelöst durch eine elektrische Maschine nach Anspruch 1. Vorteilhafte Ausgestaltungen und Weiterbildungen sind in den abhängigen Ansprüchen angegeben.

Eine elektrische Maschine weist einen Stator, einen Rotor und einen in einem Invertergehäuse angeordneten Inverter auf. Der Rotor ist mit seiner Rotorachse in einem ersten Lagerschild und einem zweiten Lagerschild um eine Drehachse drehbar gelagert . Der zweite Lagerschild ist in dem oder an dem Invertergehäuse angeordnet. An einer radial umlaufenden Außenoberfläche des zweiten Lagerschilds sind mindestens eine Ansaugöffnung und mindestens eine Ausblasöffnung angeordnet. Außerdem sind an dem zweiten Lagerschild mindestens zwei Kühlrippen vorhanden. Zwischen den Kühlrippen des zweiten Lagerschilds und dem Stator sowie dem Rotor ist ein Leitblech derart angeordnet, dass ein durch die mindestens eine Ansaugöffnung radial einströmendes Kühlmedium zu der mindestens einen Ausblasöffnung geführt ist.

Um eine Luftführung möglichst drallfrei zu gestalten und Strömungsverluste zu reduzieren, wird erfindungsgemäß vor einem Eintritt in das Lüfterrad eine beschaufelte oder unbeschaufelte Luftleitbuchse eingesetzt.

Durch eine Inverterintegration in das mit Kühlrippen ausgeführte zweite Lagerschild bzw. eine in Bezug auf die Drehachse axiale Montage des Inverters, d. h. einer Leistungs-, Ansteuer- und/oder Regelelektronik, an das Lagerschild, wird einerseits eine kleinbauende Maschine ermöglicht, andererseits aber eine Wärmeableitung unterstützt. Dadurch, dass der zweite Lagerschild in direktem mechanischem Kontakt mit dem Invertergehäuse ist, kann die Wärme effizient abgeleitet werden. Die Kühlung des Rotors durch das Leitblech bzw. bei Verwendung von Luft als Kühlmedium eines Luftleitblechs bzw. einer Trennwand und die dadurch erfolgte Umlenkung eines Kühlmediumflusses von einem Einströmkanal in einen Ausströmkanal unterstützt eine effiziente Kühlung der gesamten Maschine, ohne die Größe der Maschine verändern zu müssen. Durch die Umlenkung des Kühlmediums mithilfe des Leitblechs ist es möglich, die typischerweise radial eingesaugte Luft als Kühlmedium über einen ganzen Umfang des Lagerschilds bzw. des Invertergehäuses radial nach innen über Kühlrippen zu führen. Eine zur Wärmeabgabe wirksame Gehäuseoberfläche wird somit vergrößert und ein Wärmeaustausch und damit eine Kühlung der Bauteile des Inverters, d. h. einer Steuer- und Leistungselektronik, optimiert. Dies führt zu einer höheren Zuverlässigkeit und Lebensdauer der elektronischen Bauteile der gesamten Schaltung.

Typischerweise sind jedoch sowohl an dem ersten Lagerschild als auch an dem zweiten Lagerschild eine Mehrzahl von Ansaugöffnungen und Ausblasöffnungen angebracht, um das Kühlmedium in hohem Volumendurchsatz zum Kühlen nutzen zu können. Die Ansaugöffnungen können hierbei an dem ersten Lagerschild axial angeordnet sein, wohingegen die Ausblasöffnungen am ersten Lagerschild und am zweiten Lagerschild radial angeordnet sind. Vorzugsweise sind die Ansaugöffnung und die Ausblasöffnung als Schlitz ausgebildet.

Der Rotor kann an zwei einander gegenüberliegenden, in Richtung der Lagerschilde weisenden Stirnseiten jeweils einen Kurzschlussring aufweisen. An dem Kurzschlussring bzw. an den Kurzschlussringen sind dann die Lüfterradschaufeln angeordnet oder ausgebildet, um das Kühlmedium mit hohem Durchsatz anzusaugen und über Wickelköpfe wieder auszublasen. Durch eine Anformung der Lüfterradschaufeln an die Kurzschlussringe ergibt sich eine platzsparende Anordnung der zum Kühlen benötigten Lüfterradschaufeln. Die Steifigkeit einer Rotorlagerung an der Loslagerseite wird typischerweise dadurch verbessert, dass keine axialen Durchbrüche im Lagerschild vorgenommen werden müssen.

Hierdurch wird ein Doppellüftersystem im saugenden Betrieb ausgebildet und die Kühlung des Rotors und des Inverters erfolgt in zwei voneinander unabhängigen Kreisläufen. In vorteilhafter Weise wird durch die Kühlmediumführung und eine Vergrößerung einer Wärmeübertragungsfläche, beispielsweise durch die Kühlrippen, für das von außen nach innen einströmende Kühlmedium sowie auch über eine Optimierung eines Wärmeübergangs zu Bauteilen des Inverters als der Steuer- und Leistungselektronik die Kühlung verbessert.

Außerdem können die Lüfterradschaufeln entgegen einer Rotationsrichtung des Rotors in der elektrischen Maschine gekrümmt ausgebildet sein. Dies ermöglicht ein vorteilhaftes Strömungsverhalten des Kühlmediums.

Die am zweiten Lagerschild angeformten Kühlrippen sind typischerweise ausgehend von einem mittigen Lagersitz radial nach außen verlaufend ausgerichtet. Typischerweise nimmt ein Rohrreihenabstand der Kühlkörper mit sinkendem Durchmesser ab. Alternativ oder zusätzlich kann ein Hohlraumanteil über eine Durchmesserverringerung konstant bleiben. Außerdem kann auch eine versetzte Anordnung von Kühlrippen bzw. Pins pro Rohrreihe vorgesehen sein.

Typischerweise sind die Kühlrippen mit einem in einer Draufsicht aus Richtung der Drehachse gerade oder gekrümmt verlaufenden oder kreisförmigen Querschnitt ausgebildet, also als Flächen- bzw. Nadelrippen. Hierdurch kann ein Strömungsverhalten des Kühlmediums wie gewünscht beeinflusst werden.

Die Lüfterradschaufeln können einteilig bzw. einstückig mit dem Kurzschlussring oder dem Rotor ausgeführt sein, so dass eine stoffschlüssige Verbindung vorliegt.

Das zweite Lagerschild und das Invertergehäuse können einteilig bzw. einstückig, also als ein einzelnes Bauteil ausgeführt sein.

Die beschriebene elektrische Maschine wird typischerweise als Elektromotor eingesetzt, vorzugsweise in einem Elektrofahrzeug.

Ausführungsbeispiele der Erfindung sind in den Zeichnungen dargestellt und werden nachfolgend anhand der Figuren 1 bis 16 erläutert.

Es zeigen:
Fig. 1 eine schematische Darstellung einer elektrischen Maschine;
Fig. 2 eine schematische Darstellung einer weiteren Ausführungsform der elektrischen Maschine mit integriertem Lagerschild;
Fig. 3 eine Explosionsdarstellung der elektrischen Maschine;
Fig. 4 eine Schnittdarstellung der elektrischen Maschine;
Fig. 5 eine perspektivische Ansicht eines Rotors;
Fig. 6 eine Figur 5 entsprechende perspektivische Ansicht des Rotors mit Luftleitbuchse;
Fig. 7 eine perspektivische Ansicht des Lagerschilds;
Fig. 8 eine Draufsicht des Lagerschilds mit gekrümmten Kühlrippen;
Fig. 9 eine Draufsicht des Lagerschilds mit geraden Kühlrippen;
Fig. 10 eine Draufsicht des Lagerschilds mit Kühlrippen unterschiedlicher Länge;
Fig. 11 eine vergrößerte Draufsicht auf geraden Kühlrippen;
Fig. 12 eine perspektivische Ansicht der in Figur 11 gezeigten Kühlrippen;
Fig. 13 eine vergrößerte Draufsicht auf von gekrümmten Kühlrippen;
Fig. 14 eine perspektivische Ansicht der in Figur 13 gezeigten Kühlrippen;
Fig. 15 eine vergrößerte Draufsicht auf runde Kühlrippen und
Fig. 16 eine perspektivische Ansicht der in Figur 15 gezeigten Kühlrippen.

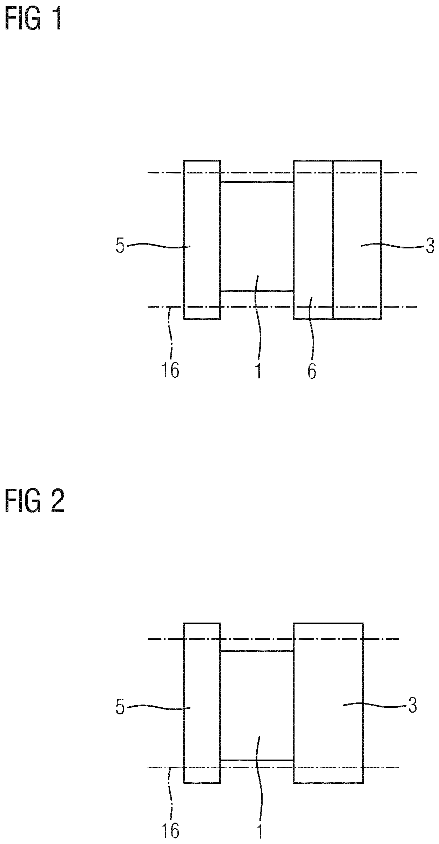

Figur 1 zeigt in einer schematischen Ansicht eine elektrische Maschine mit einem Stator 1, einem ersten Lagerschild 5, einem zweiten Lagerschild 6 und einem Invertergehäuse 3. Die genannten Bauteile sind durch eine Verschraubung 16 miteinander verbunden. Der erste Lagerschild 5 und der zweite Lagerschild 6 sind voneinander beabstandet, aber durch den Stator 1 miteinander verbunden. Der zweite Lagerschild 6 ist in unmittelbar berührendem, also direktem Kontakt mit dem Invertergehäuse 3. Die elektrische Maschine kann ohne oder mit Gehäuse gebaut sein. Sofern ein Gehäuse verwendet wird, wird ein Inverter durch einen axialen Anbau des Invertergehäuses 3 an das Motorgehäuse in dieses integriert. In Figur 1 ist eine bauraumoptimierte und kostenoptimierte Elektromotoranordnung mit gehäuseloser Bauweise des Motors gezeigt.

In dem in Fig. 2 gezeigten Ausführungsbeispiel ist der zweite Lagerschild 6 in das Invertergehäuse 3 integriert, um eine bessere Wärmeabführung bei gleichzeitig verringertem Volumen der elektrischen Maschine erreichen zu können. Durch einen bei der in Figur 2 gezeigten Ausführungsform realisierten Integrationsgrad kann zusätzlicher Bauraum eingespart werden, da in dem Invertergehäuse 3 ein Loslager einer Rotorlagerung integriert angeordnet ist. Die elektrische Maschine selbst ist ein Elektromotor, der in einem Elektrofahrzeug eingesetzt wird. Wiederkehrende Merkmale sind in dieser wie auch in den folgenden Figuren mit identischen Bezugszeichen versehen.

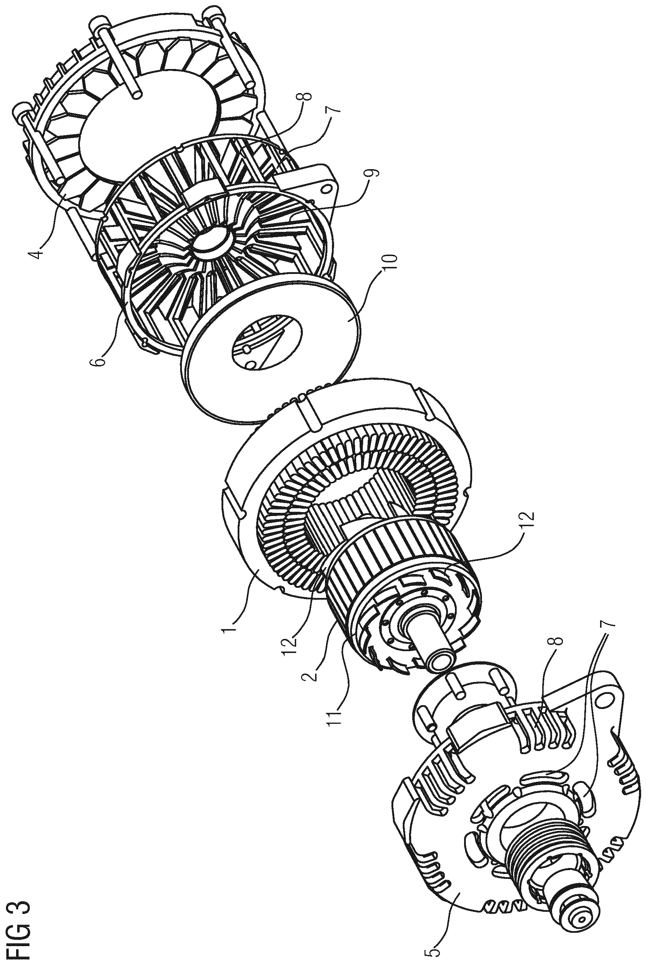

In Fig. 3 ist die elektrische Maschine in einer Explosionszeichnung dargestellt. Der erste Lagerschild 5 weist axial angeordnet mehrere Ansaugöffnungen 7 auf, durch die Luft als Kühlmedium angesaugt wird. Am zweiten Lagerschild 6 sind auf einer um eine Drehachse umlaufenden Außenfläche mehrere Ansaugöffnungen 7 und mehrere Ausblasöffnungen 8 angeordnet, so dass hier Luft radial angesaugt und ausgeblasen wird. Der erste Lagerschild 5 weist in gleicher Weise radial angeordnete Ausblasöffnungen 8 auf. Der Rotor 2 wird in den beiden Lagerschilden 5 und 6 gelagert und kann im Stator 1 rotieren. An einander gegenüberliegenden und jeweils einem der Lagerschilde 5, 6 zugewandten Seiten des Rotors 2 ist ein Kurzschlussring 11 mit daran angeformten Lüfterradschaufeln 12 angebracht. Die Drehachse verläuft mittig durch die Bauteile der elektrischen Maschine.

Somit ergibt sich ein Kompaktantrieb mit einer doppelseitigen Luftkühlung. Die elektrische Maschine mit integriertem Inverter 4 weist eine optimierte Kühlleistung bei gleichzeitig minimalem Platzbedarf für einen Gehäuseaufbau auf. Die Kühlung erfolgt durch zwei motoreigene Lüfter, die im dargestellten Ausführungsbeispiel an den Kurzschlussringen 11 angeordnet sind. Der Inverter 4 ist in dem Invertergehäuse 3 gekapselt angeordnet.

Zusätzlich ist zwischen dem zweiten Lagerschild 6 und dem Rotor 2 bzw. dem Stator 1 ein Luftleitblech 10 vorgesehen, durch das die Luft umgeleitet wird.

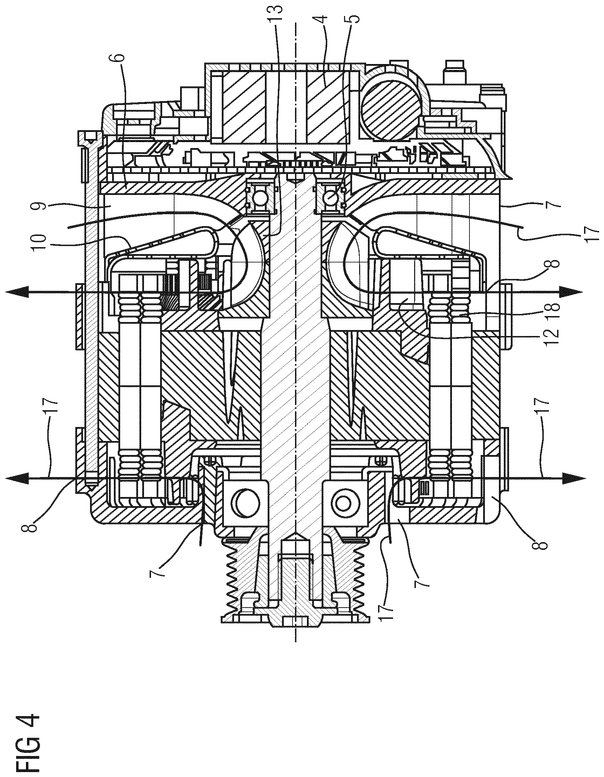

Die Funktion des Luftleitbleches 10 und der Luftleitbuchse 13 ist in der in Fig. 4 gezeigten Schnittdarstellung erklärt. Ein Luftstrom 17 durch die Ansaugöffnung 7 wird durch das Luftleitblech 10 von einem Einströmkanal in einen Ausströmkanal zur Ausblasöffnung 8 umgeleitet. Abtriebsseitig erfolgt ein axiales Ansaugen über axiale Schlitze am ersten Lagerschild 5 und ein radiales Ausblasen über einen Statorwickelkopf 18. Antriebsseitig erfolgt ein radiales Ansaugen über die Kühlrippen 9 des zweiten Lagerschilds 6 und ein radiales Ausblasen über den Statorwickelkopf 18. Die Lüfterradschaufeln 12 sind hierbei dem jeweiligen Statorwickelkopf 18 benachbart. Um beide Wickelköpfe 18 des Stators 1 kühlen zu können, sind axial an dem Rotor 2 die Lüfterradschaufeln 12 angebracht.

Im Unterschied zum Stand der Technik erfährt das zweite Lagerschild 6 durch eine konstruktive Auslegung des radialen Ansaugprinzips in Verbindung mit der Luftleitgeometrie an der Loslagerseite keine Schwächung der Steifigkeit durch axiale Lufteintrittsschlitze. Die Luft wird an der Loslagerseite nicht axial angesaugt, sondern radial. Das ermöglicht über die am zweiten Lagerschild 6 angebrachten Kühlrippen 9 einerseits eine effektive Kühlung des integrierten oder mit dem Motorgehäuse verbundenen Invertergehäuses 3 und andererseits eine hohe Eigensteifigkeit des zweiten Lagerschilds 6 und somit eine hohe Steifigkeit der Rotorlagerung. Das radiale Ansaugen der Luft ermöglicht den gezielten Einsatz von Kühlrippen 9, die neben der Kühlung auch die mechanische Festigkeit des zweiten Lagerschilds 6 erhöhen und auch die Schallabstrahlung der Maschine reduzieren können durch Unterdrücken von Oberflächenschwingungen.

Durch die dargestellte Anordnung wird eine gute Kühlung des Loslagers erreicht, das das am stärksten temperaturbelastete Lager ist. Aufgrund des radialen Ansaugens von Kühlluft erhält man eine am Außenumfang beginnende große kreisringförmige Fläche für eine Berippung des zweiten Lagerschilds 6 bzw. des Invertergehäuses 3. Durch die doppelseitige Luftkühlung ist die Abtriebsseite durch eine alleinige Kühlung des Wickelkopfs weniger Temperaturbelastung als die Antriebsseite (Loslagerseite) ausgesetzt, wo der Inverter 4 und der Wickelkopf 18 gekühlt werden müssen. Durch die Kühlung von Inverter 4 und Wickelkopf 18 kommt es zu einem Temperaturgefälle innerhalb des Stators 1 bzw. in der elektrischen Maschine. Aufgrund dieses Temperaturgradienten und durch eine gute Wärmeleitfähigkeit der Wicklung kann die auf der Antriebsseite durch den Motor und den Inverter 4 entstehende Wärme auch über die Abtriebsseite abgeführt werden, wodurch sich die erbrachte Kühlleistung auf der Antriebsseite erhöht. Auf diese Weise ist es möglich, eine Dimensionierung der mit dem Rotor 2 verbundenen Lüfterradschaufeln 12 entsprechend der vorhandenen Bauräume und nicht allein nach der pro Seite zu erbringenden Kühlleistung auszulegen. Dadurch erreicht man für die elektrische Maschine mit integriertem Inverter 4 ein bauraumoptimiertes Design.

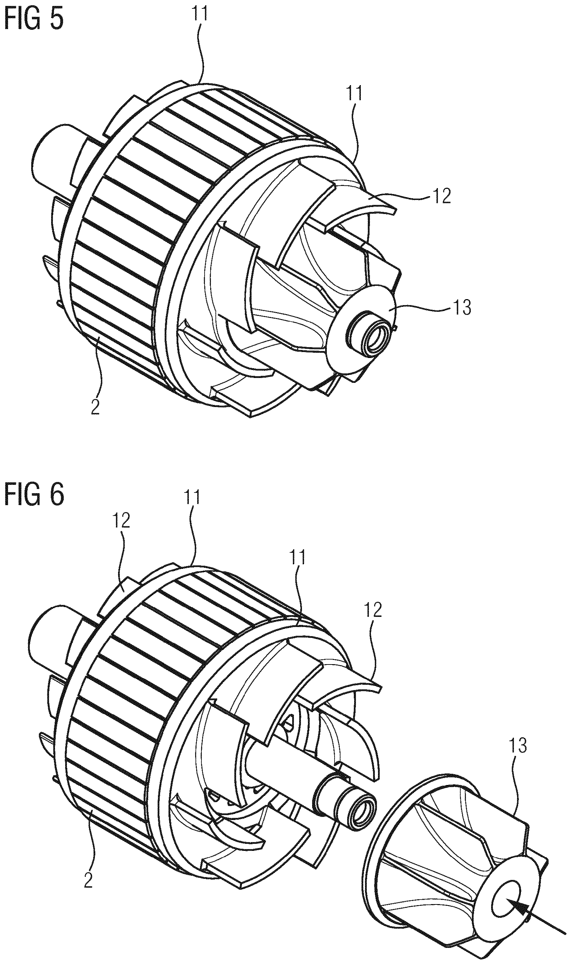

In Fig. 5 ist in einer perspektivischen Ansicht der Rotor 2 mit beschaufelter Luftleitbuchse 13 sowie mit an einander gegenüberliegenden Seiten angeordneten Kurzschlussringen 11 gezeigt. Der Rotor 2 ist an den Kurzschlussringen 11 mit einstückig an diesen angeordneten Lüfterradschaufeln 12 versehen.

Der Rotor 2 mit den Kurzschlussringen 11 und den Lüfterradschaufeln 12 ist in Fig. 6 in einer Figur 5 entsprechenden Darstellung wiedergegeben. Zusätzlich ist die auf eine Rotorachse montierbare Luftleitbuchse 13 beschaufelt dargestellt. Die Lüfterradschaufeln 12 sind als rückwärtsgekrümmte Schaufeln ausgeführt und typischerweise entgegen einer Rotationsrichtung des Rotors 2 in der elektrischen Maschine gekrümmt.

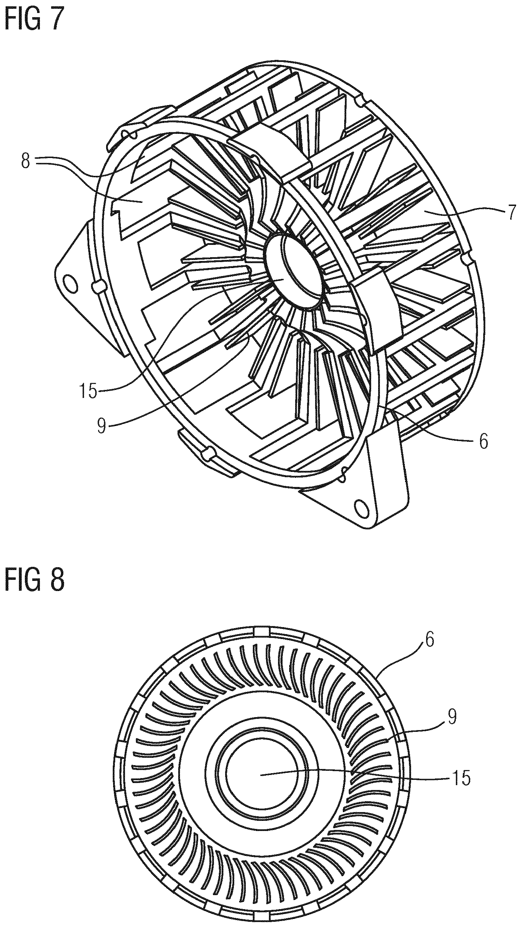

In Fig. 7 ist in einer perspektivischen Ansicht der zweite Lagerschild 6 mit darauf angeordneten Kühlrippen 9 gezeigt. Zum Erreichen einer möglichst hohen Kühlleistung in Bezug auf das axial angeordnete Invertergehäuse 3 sind an dem zweiten Lagerschild 6 Wärmeübertragungsflächen in Form von Flächen- bzw. Nadelrippen ausgebildet. Damit kann die radial angesaugte Luft über den ganzen Umfang des zweiten Lagerschilds 6 bzw. des Invertergehäuses 3 radial nach innen geführt werden. Die zur Wärmeabgabe wirksame Gehäuseoberfläche wird somit vergrößert und der Wärmeaustausch und damit die Kühlung der Bauteile der Steuer- und Leistungselektronik optimiert. Dies führt zu einer höheren Zuverlässigkeit und Lebensdauer der elektronischen Bauteile der gesamten Schaltung.

In dem in Fig. 7 dargestellten Ausführungsbeispiel werden Flächenrippen mit in Draufsicht aus Richtung der Drehachse geradem Querschnitt verwendet. Der zweite Lagerschild 6 und somit auch die Kühlrippen 9 sind aus einem Material mit einer guten Wärmeleitfähigkeit, im gezeigten Ausführungsbeispiel einer Aluminiumlegierung, die beim Druckgussverfahren Verwendung findet. Eine Verrippung ist möglichst fein gehalten, so dass die Kühlrippen 9 eine möglichst große Oberfläche besitzen, und es wird eine dicke Rippenwurzel verwendet, so dass eine bessere Wärmeleitung gegeben ist. Eine höhere Rippendichte führt zu einer Vergrößerung der Wärmeabgabefläche und damit zu einer höheren Effizienz für die Kühlung. Die Kühlrippen 9 sind in dem in Fig. 7 dargestellten Ausführungsbeispiel mit verschiedenen Längen ausgestaltet. Außerdem weist der zweite Lagerschild 6 mehrere Ansaugöffnungen 7 auf, sowie mehrere radiale Ausblasöffnungen 8 auf, die auf einer umlaufenden äußeren Oberfläche des zweiten Lagerschilds 6 angeordnet sind.

Durch ein radiales Ansaugprinzip wird Luft über einen ganzen Umfang des zweiten Lagerschilds 6 radial nach innen geführt. Kurze Einzelrippen dienen dazu, nach maximal einem Zehnfachen eines hydraulischen Durchmessers und anschließendem Versetzen einer nachfolgenden Rippenreihe in einen Ablaufstrom eines vorhergehenden Kanals gezielt einen Temperaturgradienten in einer rippenumschließenden Strömung hochzuhalten.

Eine als Rohrströmung betrachtete Querschnittsdurchströmung der Rippenkanäle ist zunächst eine Mischströmung bis zu einem Erreichen einer hydrodynamischen und thermischen Einlauflänge. In diesem Bereich liegen zwei Strömungsformen vor, die freie laminare oder turbulente Oberströmung und die an der jeweiligen Kühlrippe 9 anliegende anwachsende Grenzschichtströmung. Letztere weist enorme Turbulenzen auf, welche einen Wärmeübergang signifikant erhöhen, gleichzeitig kann die Oberströmung weitestgehend ungestört den Kühlrippenverlauf passieren. Dies ist allerdings nur solange der Fall, bis sich die Grenzschicht ausgebildet hat, d. h. ihre Dicke auf den halben Rohrdurchmesser angewachsen ist.

Durch gezieltes "Abreißenlassen" der Grenzschicht vor Erreichen der thermischen und hydrodynamischen Einlauflänge wird gerade dieser Effekt des höheren Wärmeübergangs ausgenutzt und durch Versetzen der Kühlrippen 9 wird dieser Effekt für jede Rippenreihe neu angesetzt.

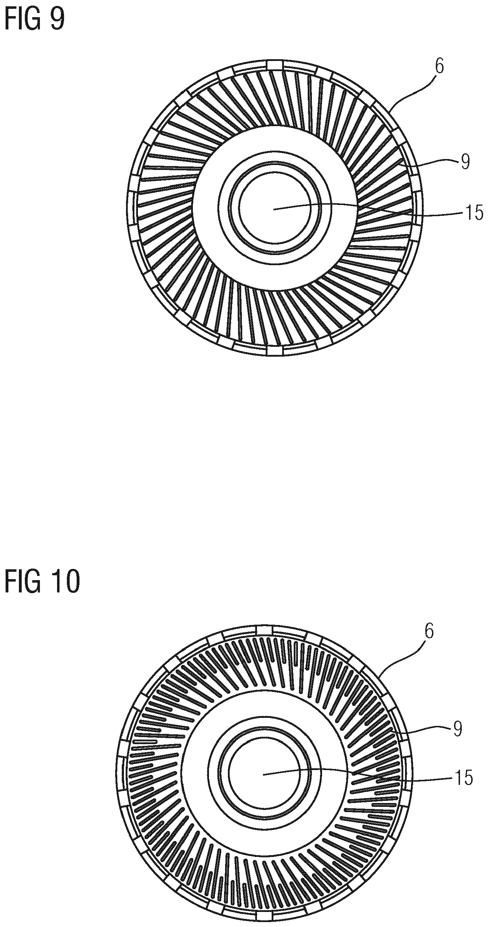

In Fig. 8 ist in einer aus Richtung der Drehachse betrachteten Draufsicht der zweite Lagerschild 6 mit einem mittig angeordneten Lagersitz 15 zur Aufnahme der Rotorachse und um den Lagersitz 15 umlaufenden Kühlungsrippen 9 gezeigt. Die Kühlungsrippen 9 sind gekrümmt ausgeführt, was den Vorteil eines Vordralls aufweist. Die Kühlrippen 9 müssen auch nicht alle gleich lang sein, sondern können abwechselnd auch eine unterschiedliche Länge aufweisen. Fig. 9 zeigt in einer Fig. 8 entsprechenden Ansicht ein weiteres Ausführungsbeispiel des zweiten Lagerschilds 6 mit gerade von dem Lagersitz 15 nach außen an einen Rand bzw. die Außenoberfläche mit den Ansaugöffnungen 7 und Ausblasöffnungen 8 verlaufende Kühlrippen 9. Die Kühlrippen 9 verlaufen somit gerade in Richtung eines Volumenstroms des Kühlmediums. Fig. 10 zeigt eine weitere Variation des zweiten Lagerschilds 6, bei der die Kühlrippen 9 abwechselnd unterschiedliche Längen aufweisen. Somit liegen mehrreihig versetzte Kühlrippen 9 in Richtung des Volumenstroms vor. In weiteren Ausführungsformen können auch mehrere, zueinander versetzte und bzw. oder mit unterschiedlichen Abständen zu dem Lagersitz 15 versehene Kühlrippen 9 verwendet werden.

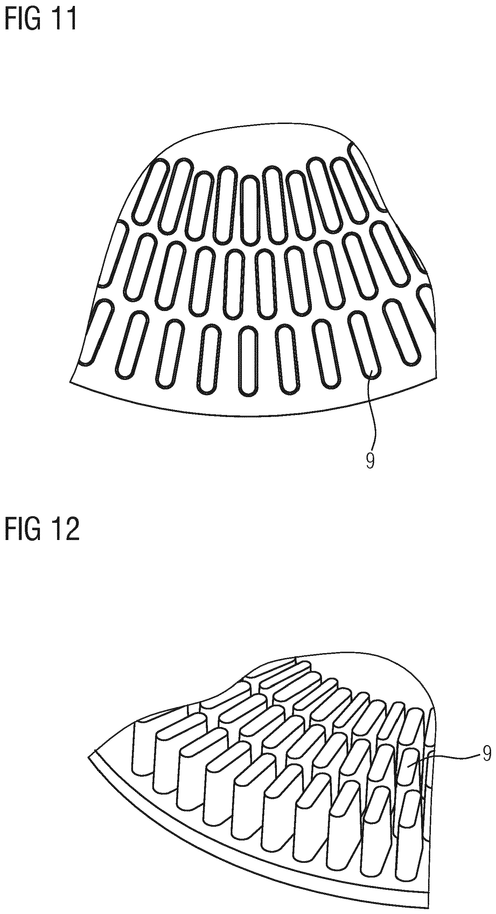

Eine vergrößerte Draufsicht auf in mehreren Reihen versetzt zueinander angeordneten geraden Kühlrippen 9 ist in Fig. 11 gezeigt, während Fig. 12 eine entsprechende perspektivische Ansicht zeigt.

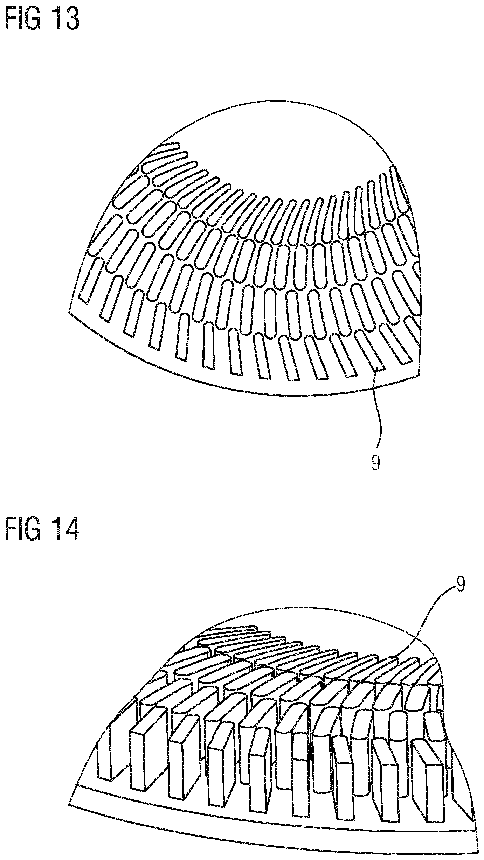

In vier zueinander versetzten Reihen angeordnete geschwungene Kühlrippen 9 zeigt Fig. 13 in einer Figur 11 entsprechenden Ansicht, während diese Kühlrippen 9 in Fig. 14 in einer Fig. 12 entsprechenden Ansicht dargestellt sind.

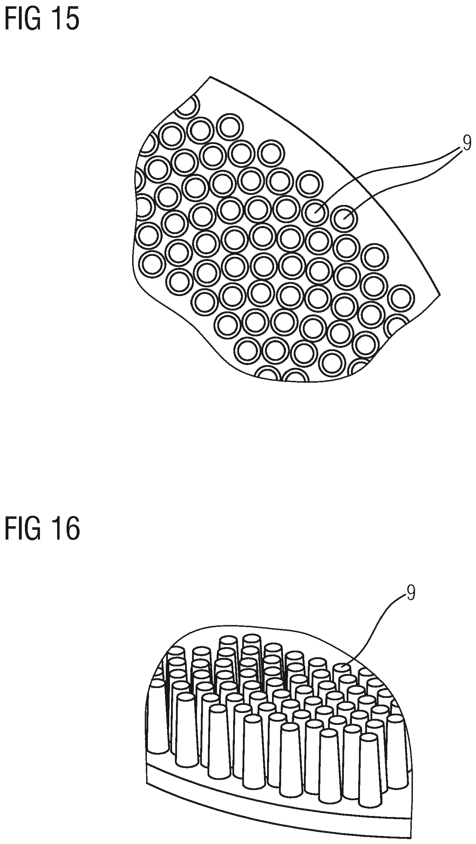

Es können, wie in Fig. 15 in einer Figur 11 entsprechenden Ansicht gezeigt, auch Nadelrippen, also Kühlrippen 9 mit in Draufsicht kreisförmigen Querschnitt verwendet werden. Fig. 16 zeigt eine perspektivische Ansicht dieser Ausführungsform entsprechend der Darstellung der Figur 12.

Lediglich in den Ausführungsbeispielen offenbarte Merkmale der verschiedenen Ausführungsformen können miteinander kombiniert und einzeln beansprucht werden.

## Patentansprüche

1. Elektrische Maschine
mit einem Stator (1) und einem Rotor (2) sowie einem in einem Invertergehäuse (3) angeordneten Inverter (4), wobei der Rotor (2) mit seiner Rotorachse in einem ersten Lagerschild (5) und einem zweiten, in dem oder an dem Invertergehäuse (3) angeordneten Lagerschild (6) um eine Drehachse drehbar gelagert ist und eine beschaufelt oder unbeschaufelt ausgeführte Luftleitbuchse (13) aufweist,
an einer radial umlaufenden Außenoberfläche des zweiten Lagerschilds (6) mindestens eine Ansaugöffnung (7) und mindestens eine Ausblasöffnung (8) angeordnet sind und
am zweiten Lagerschild (6) mindestens zwei Kühlrippen (9) vorhanden sind, wobei
zwischen den Kühlrippen (9) des zweiten Lagerschilds (6) und dem Stator (1) sowie dem in dem Stator (1) gelagerten Rotor (2) ein Luftleitblech (10) derart angeordnet ist, dass ein durch die mindestens eine Ansaugöffnung (7) radial einströmendes Kühlmedium über die Luftleitbuchse zu der mindestens einen Ausblasöffnung (8) geführt und durch das Luftleitblech umgeleitet ist, wobei das Kühlmedium Luft ist.

2. Elektrische Maschine nach Anspruch 1, **dadurch gekennzeichnet, dass** der Rotor (2) an zwei einander gegenüberliegenden, in Richtung der Lagerschilde (5, 6) weisenden Stirnseiten jeweils einen Kurzschlussring (11) aufweist, an dem Lüfterradschaufeln (12) angeordnet oder ausgebildet sind.

3. Elektrische Maschine nach Anspruch 1 oder 2, **dadurch gekennzeichnet, dass** die Lüfterradschaufeln (12) entgegen einer Rotationsrichtung des Rotors (2) in der elektrischen Maschine gekrümmt ausgebildet sind.

4. Elektrische Maschine nach einem der vorhergehenden Ansprüche, **dadurch gekennzeichnet, dass** die am zweiten Lagerschild (6) vorhandenen Kühlrippen (9) radial von einem Lagersitz (15) nach außen verlaufend ausgerichtet sind und vorzugsweise abwechselnd eine unterschiedliche Länge aufweisen.

5. Elektrische Maschine nach einem der vorhergehenden Ansprüche, **dadurch gekennzeichnet, dass** um den Lagersitz (15) des zweiten Lagerschilds (6) umlaufend die Kühlrippen (9) in mindestens zwei zueinander versetzten Reihen mit unterschiedlichen Abständen zu der Drehachse angeordnet sind.

6. Elektrische Maschine nach einem der vorhergehenden Ansprüche, **dadurch gekennzeichnet, dass** die Kühlrippen (9) mit einem in einer Draufsicht aus Richtung der Drehachse gerade oder gekrümmt verlaufenden oder kreisförmigen Querschnitt ausgebildet sind.

7. Elektrische Maschine nach einem der vorhergehenden Ansprüche, **dadurch gekennzeichnet, dass** das zweite Lagerschild (6) und das Invertergehäuse (3) einteilig ausgebildet sind.

## Claims

1. Electric machine
having a stator (1) and a rotor (2) and also an inverter (4) arranged in an inverter housing (3), wherein
the rotor (2) is mounted so as to be rotatable about an axis of rotation with its rotor axis in a first end shield (5) and a second end shield (6) that is arranged in or on the inverter housing (3), and has an air guiding sleeve (13) embodied with or without blades,
at least one intake opening (7) and at least one blow-out opening (8) are arranged in a radially encircling outer surface of the second end shield (6), and
at least two cooling fins (9) are present on the second end shield (6), wherein
a baffle (10) is arranged in such a way between the cooling fins (9) of the second end shield (6) and the stator (1) and also the rotor (2) mounted in the stator (1) that a cooling medium flowing in radially through the at least one intake opening (7) is guided via the air guiding sleeve to the at least one blow-out opening (8) and is redirected by the baffle, wherein the cooling medium is air.

2. Electric machine according to Claim 1, **characterized in that** the rotor (2) has a respective short-circuiting ring (11) at two mutually opposite end sides that face in the direction of the end shields (5, 6), impeller blades (12) being arranged or formed on said short-circuiting ring (11).

3. Electric machine according to Claim 1 or 2, **characterized in that** the impeller blades (12) are formed in a manner curved counter to a direction of rotation of the rotor (2) in the electric machine.

4. Electric machine according to one of the preceding claims, **characterized in that** the cooling fins (9) present on the second end shield (6) are oriented in a manner extending outward radially from a bearing seat (15) and preferably alternately have different lengths.

5. Electric machine according to one of the preceding claims, **characterized in that**, encircling the bearing seat (15) of the second end shield (6), the cooling fins (9) are arranged in at least two mutually offset rows with different spacings from the axis of rotation.

6. Electric machine according to one of the preceding claims, **characterized in that** the cooling fins (9) are formed with a cross section that is circular or extends in a straight or curved manner from the direction of the axis of rotation as seen in plan view.

7. Electric machine according to one of the preceding claims, **characterized in that** the second end shield (6) and the inverter housing (3) are formed in one piece.

## Revendications

1. Machine électrique comprenant un stator (1) et un rotor (2) ainsi qu'un inverseur (4) disposé dans un boîtier d'inverseur (3),
le rotor (2) dont l'axe de rotor est placé dans une première flasque (5) et une deuxième flasque (6), disposée dans ou sur le boîtier d'inverseur {3), étant monté de manière à pouvoir tourner sur un axe de rotation et comportant une douille de guidage d'air (13) pourvue ou non d'aubes,
au moins une ouverture d'aspiration (7) et au moins une ouverture d'évacuation (8) étant ménagées au niveau d'une surface extérieure radialement périphérique de la deuxième flasque (6) et au moins deux nervures de refroidissement (9) étant présentes au niveau de la deuxième flasque (6),
un déflecteur d'air (10) étant disposé entre les nervures de refroidissement (9) de la deuxième flasque (6) et le stator (1) ainsi que le rotor (2) monté dans le stator (1) de telle sorte qu'un milieu de refroidissement entrant radialement par l'au moins une ouverture d'aspiration (7) soit guidé par la douille de guidage d'air vers l'au moins une ouverture d'évacuation (8) et soit dévié par le déflecteur d'air, le milieu de refroidissement étant de l'air.

2. Machine électrique selon la revendication 1, **caractérisée en ce que** le rotor (2) comporte, au niveau de deux faces d'extrémité opposées l'une à l'autre et dirigées vers les flasques (5, 6), une bague de court-circuit (11) au niveau de laquelle sont disposées ou formées des aubes de soufflante (12) .

3. Machine électrique selon la revendication 1 ou 2, **caractérisée en ce que** les aubes de soufflante (12) sont conçues pour être incurvées dans un sens opposé au sens de rotation du rotor (2) dans la machine électrique.

4. Machine électrique selon l'une des revendications précédentes, **caractérisée en ce que** les nervures de refroidissement (9), présentes sur la deuxième flasque (6), sont orientées radialement depuis un siège de palier (15) vers l'extérieur et ont de préférence, de manière alternative, des longueurs différentes.

5. Machine électrique selon l'une des revendications précédentes, **caractérisée en ce que** les nervures de refroidissement (9) sont disposées, périphériquement autour du siège de palier (15) de la deuxième flasque (6), suivant au moins deux rangées décalées l'une de l'autre à des distances différentes de l'axe de rotation.

6. Machine électrique selon l'une des revendications précédentes, **caractérisée en ce que** les nervures de refroidissement (9) sont conçues avec une section transversale circulaire ou s'étendant de manière rectiligne ou incurvée dans une vue en plan depuis la direction de l'axe de rotation.

7. Machine électrique selon l'une des revendications précédentes, **caractérisée en ce que** la deuxième flasque (6) et le boîtier d'inverseur (3) sont conçus d'une seule pièce.
